# NEUE EUROPÄISCHE PATENTSCHRIFT

(11) **EP 2 385 077 B2**
(45) Veröffentlichungstag und Bekanntmachung des Hinweises auf die Entscheidung über den Einspruch: **27.11.2019**
(45) Hinweis auf die Patenterteilung: 26.12.2012
(21) Anmeldenummer: 11164116.3
(22) Anmeldetag: 28.04.2011
(51) Int. Cl.: C08G 77/06, C08L 83/04

(54) **Verfahren zur Herstellung von Siliconemulsionen**
Preparing silicone emulsions
Procédé de préparation d'émulsion silicone

(30) Priorität: 03.05.2010 DE 102010028491
(43) Veröffentlichungstag der Anmeldung: 09.11.2011
(73) Patentinhaber: Wacker Chemie AG, 81737 München (DE)
(72) Erfinder: Brehm, Dr. Christof, 84489, Burghausen (DE); Schröck, Dr. Robert, 84503, Altötting (DE)
(74) Vertreter: Fritz, Helmut

(56) Entgegenhaltungen:
- WO-A1-2006/119916
- WO-A1-2011/032824
- US-A- 5 504 150
- DATABASE WPI Week 200634 Thomson Scientific, London, GB; AN 2006-325071 XP002638953, & JP 2006 117868 A (SHINETSU CHEM IND CO LTD) 11. Mai 2006 (2006-05-11)

## Beschreibung

Die Erfindung betrifft ein Verfahren zur Herstellung von Emulsionen von Organopolysiloxanen durch Polymerisation von Hydroxy-terminierten Organopolysiloxanen und Trialkylsilyl-terminierten Organopolysiloxanen.

Die Herstellung von Emulsionen von Organopolysiloxanen durch Emulsionspolymerisation ist eine seit langem etablierte Methode. Dies gilt insbesondere für die Emulsionspolymerisation von Cyclen. So ist beispielsweise in US 2,891,920 die Herstellung von Organopolysiloxan-Emulsionen geringer Ölviskosität ausgehend von Octamethylcyclotetrasiloxan in Gegenwart starker Alkali oder starker Mineralsäuren beschrieben.

In DE 1495512 wird die gleichzeitige Verwendung von Sulfonsäuren und deren Salze als Emulgator und Katalysator zur Emulsionspolymerisation von cyclischen Dimethylsiloxanen bei unterschiedlichen Temperaturen beschrieben. Der Cyclen-Gehalt im resultierenden Produkt liegt allerdings in der Regel über 10%.

Unterschiedliche Katalysatoren/Emulgatoren/Stabilisatoren, mit dem Ziel stabilere Emulsionen oder Emulsionen mit gewünschter Ölviskosität zu erhalten, werden in vielen Patenten beschrieben, z.B. in DE 1495512. Dort ist insbesondere beschrieben, dass durch die Bildung einer Voremulsion besonders stabile Emulsionen erhalten werden können.

Die Herstellung von Emulsionen von Organopolysiloxanen in Gegenwart Trimethylsilyl-terminierter Monomere ist in JP 2002-37888 wie auch JP 2000-95661 beschrieben. Auch US 2,891,920 beschreibt bereits diese Methode für den Fall, dass man Trimetyhlsilyl-terminierte Dimethylsiloxane erhalten möchte; hier werden cyclische Dimethylsiloxane zusammen mit Hexamethyldisiloxan im Mol-Verhältnis 99:1 in der Emulsion polymerisiert.

Die Herstellung von Emulsionen von Organopolysiloxanen aus Hydroxy-terminierten Organopolysiloxane und zyklischen Organopolysiloxanen in wässrigem Medium in Gegenwart eines kurzkettigen, Trialkylsilyl-terminierten Diorganopolysiloxans, wobei dieses zwingend eine Viskosität höchstens 50 mm²/s aufweist, ist in JP 2006-117868 beschrieben.

Diese Übersicht zeigt, dass die Herstellung von Emulsionen von Organopolysiloxanen durch Emulsionspolymerisation sehr komplex und in Bezug auf die Einstellung einer geeigneten Kettenlänge und damit einer geeigneten Ölviskosität bei gleichzeitig optimalen Emulsionseigenschaften wie Scher- und Lagerstabilität schwierig ist. Dies hängt vor allem mit damit zusammen, dass die Emulsionspolymerisation einem Mechanismus unterliegt, bei dem Kettenpropagation wie Kettenbruch parallel zueinander ablaufen.

Gegenstand der Erfindung ist ein Verfahren zur Herstellung von Emulsionen von Organopolysiloxanen (O), bei dem in wässrigem Medium
(1) 100 Gewichtsteile Hydroxy-terminierte Organopolysiloxane und
(2) mindestens 0,01 Gewichtsteile Trialkylsilyl-terminierte Organopolysiloxane mit einer Viskosität von mindestens 55 mm²/s
   in Gegenwart von
(3) oberflächenaktiven sauren Polymerisationskatalysatoren, die ausgewählt werden aus Sulfonsäuren und Hydrogensulfaten und
(4) Emulgator
   bis zum Erreichen der gewünschten Molekülgröße polymerisiert werden.

Der Vorteil des Verfahrens liegt zum einen darin, dass durch die Verwendung von Trialkylsilyl-terminierten Organopolysiloxanen (2) eine höhere Reproduzierbarkeit bezüglich des gewünschten Polymerisationsgrades der Organopolysiloxane (O) erreicht wird, als dies bei Verwendung Hydroxy-terminierter Organopolysiloxane (1) oder cyclischer Dimethylsiloxane alleine der Fall ist, wie es der allgemein bekannten Verfahrensführung entspricht. Trialkylsilyl-terminiertes Organopolysiloxan (2) reagiert dabei als Kettenendstopper.

Das erfindungsgemäße Verfahren hat zum anderen den Vorteil, dass neben Emulsionen von Organopolysiloxanen (O) höherer Ölviskosität auch solche mit geringerer Ölviskosität sehr gezielt und mit hoher Reproduzierbarkeit erhalten werden können.

Überraschenderweise wurde festgestellt, dass im Gegensatz zur Verwendung von Monomeren wie in JP 2002-37888 oder gering viskoser Polymere wie in JP 2006-117868, Trialkylsilyl-terminierten Organopolysiloxanen (2) mit einer Viskosität von mindestens 55 mm²/s, nicht nur genauso gut angewandt werden können, sondern auch zur Einstellung des gewünschten Polymerisationsgrads wesentlich genauer dosiert werden können, was die Einstellung des gewünschten Molekulargewichtes wesentlich erleichtert.

Desweiteren ist die Fahrweise bei den gegebenen Temperaturen und der Zeit unter 24 Stunden wirtschaftlich besonders attraktiv und wirkt sich sehr vorteilhaft auf eine möglichst geringe Bildung an cyclischen Dimethylsiloxanen, wie Octamethylcyclotetrasiloxan oder Decamethylcyclopentasiloxan aus.

Die erfindungsgemäß erhaltenen Emulsionen zeichnen sich ferner durch ihre hohe Lagerstabilität, auch bei erhöhter Temperatur, und durch ihre hohe Scherstabilität aus.

Durch das Verfahren können als Organopolysiloxane (O) Gemische aus zweifach Hydroxy-terminierten, zweifach Trialkylsilyl-terminierten und gemischt Hydroxy-trialkylsilyl-terminierten Organopolysiloxanen erhalten werden.

Bei dem erfindungsgemäßen Verfahren sind unter Hydroxy-terminierten Organopolysiloxanen (1) vorzugsweise Polymere der allgemeinen Formel 1 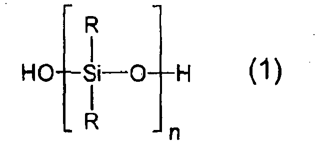 zu verstehen, wobei
R einen einwertigen, unsubstituierten oder Substituenten, die Elemente enthalten, die ausgewählt werden aus N, P, S, O, Si, H und Halogen tragenden, gesättigten oder ungesättigten Kohlenwasserstoffrest mit 1 bis 200 Kohlenstoffatomen, vorzugsweise 1 bis 36 Kohlenstoffatomen, besonders bevorzugt 1 bis 8 Kohlenstoffatomen, insbesondere Alkylrest, bevorzugt einen Methyl- oder Ethylrest bedeutet und
n so zu wählen ist, dass die Viskosität des Hydroxy-terminierten Organopolysiloxans (1) 5 bis 80 000 mm²/s bei 25 deg. C beträgt.

Unter Trialkylsilyl-terminierten Organopolysiloxanen (2) sind vorzugsweise Polymere der allgemeinen Formel 2 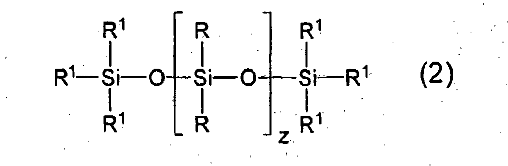 zu verstehen, wobei
R die vorstehenden Bedeutungen aufweist,
R¹ einen Alkylrest mit 1 bis 18 Kohlenstoffatomen, die durch Sauerstoffatome unterbrochen sein können, bevorzugt einen Methyl- oder Ethylrest bedeutet und
z so zu wählen ist, dass die Viskosität des Trialkylsilyl-terminierten Organopolysiloxans (2) von 55 bis 50 000 mm²/s bei 25 deg. C beträgt.

Beispiele für Kohlenwasserstoffreste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest ; Hexylreste, wie der n-Hexylrest ; Heptylreste, wie der n-Heptylrest ; Octylreste, wie der n-Octylrest und iso-Octylreste, wie der 2,2,4-Trimethylpentylrest ; Nonylreste, wie der n-Nonylrest ; Decylreste, wie der n-Decylrest ; Dodecylreste, wie der n-Dodecylrest ; Octadecylreste, wie der n-Octadecylrest ; Cycloalkylreste, wie der Cyclopentyl-, Cyclohexyl-, Cycloheptylrest und Methylcyclohexylreste ; Alkenylreste, wie der Vinyl-, 5-Hexenyl-, Cyclohexenyl-, 1-Propenyl-, Allyl-, 3-Butenyl- und 4-Pentenylrest; Arylreste, wie der Phenyl-, Naphthyl-, Anthryl- und Phenanthrylrest; Alkarylreste, wie O -, m-, p-Tolylreste; Xylylreste und Ethylphenylreste; und Aralkylreste, wie der Benzylrest, der [alpha]- und der [beta]-Phenylethylrest.

Bevorzugt sind als Rest R der Methyl-, Ethyl-, Octyl- und Phenylrest, besonders bevorzugt sind der Methyl- und Ethylrest.

Beispiele für halogenierte Reste R sind Halogenalkylreste, wie der 3,3,3-Trifluor-n-propylrest, der 2,2,2,2',2',2'-Hexafluorisopropylrest, der Heptafluorisopropylrest und Halogenarylreste, wie der O-, m- und p-Chlorphenylrest.

Beispiele für Rest R¹ sind die vorstehend bei R aufgeführten Alkylreste.

Beispiele für Hydroxy-terminierten Organosiloxane (1) sind handelsübliche Polydimethylsiloxane mit endständigen Silanolgruppen.

Diese Verbindungen werden in grossen Mengen kommerziell erzeugt und sind sehr kostengünstig zugänglich, wodurch das erfindungsgemässe Verfahren wirtschaftlich besonders attraktiv ist.

Es kann bei dem erfindungsgemässen Verfahren eine Art von Hydroxy-terminiertem Organopolysiloxan (1) oder verschiedene Arten von Hydroxy-terminiertem Organopolysiloxan (1) eingesetzt werden.

Die bei dem erfindungsgemässen Verfahren eingesetzten Hydroxy-terminierten Organopolysiloxane (1) weisen vorzugsweise Viskositäten von mindestens 10 mm²/s, besonders bevorzugt mindestens 20 mm²/s, insbesondere mindestens 50 mm²/s und höchstens 60 000 mm²/s, besonders bevorzugt höchstens 10 000 mm²/s, insbesondere höchstens 1000 mm²/s, jeweils bei 25 deg. C auf.

Trialkylsilyl-terminierte Organopolysiloxane (2) werden in grossen Mengen kommerziell erzeugt und sind sehr kostengünstig zugänglich, wodurch das erfindungsgemässe Verfahren wirtschaftlich besonders attraktiv ist.

Es kann bei dem erfindungsgemässen Verfahren eine Art von Trialkylsilyl-terminierte Organopolysiloxan (2) oder verschiedene Arten Trialkylsilyl-terminierte Organopolysiloxan (2) eingesetzt werden.

Die bei dem erfindungsgemässen Verfahren eingesetzten Trialkylsilyl-terminierten Organopolysiloxane (2) weisen vorzugsweise Viskositäten von Viskositäten von mindestens 60 mm²/s, besonders bevorzugt mindestens 70 mm²/s, insbesondere mindestens 90 mm²/s und höchstens 20 000 mm²/s, besonders bevorzugt höchstens 5000 mm²/s, insbesondere höchstens 2000 mm²/s, jeweils bei 25 deg. C auf.

Bei dem erfindungsgemässen Verfahren wird Trialkylsilyl-terminiertes Organopolysiloxan (2) vorzugsweise in Mengen von mindestens 0,02 Gewichtsteilen, besonders bevorzugt mindestens 0,05 Gewichtsteilen und höchstens 80 Gewichtsteilen, besonders bevorzugt höchstens 25 Gewichtsteilen, insbesondere höchstens 15 Gewichtsteilen eingesetzt bezogen auf 100 Gewichtsteile Hydroxy-terminiertes Organopolysiloxan (1).

Die Herstellung der erfindungsgemäßen Emulsionen von Organopolysiloxanen (O) erfolgt durch intensives Mischen der Hydroxy-terminierten Organopolysiloxane (1) in wässrigem Medium mit den Trialkylsilyl-terminierten Organopolysiloxanen (2), oberflächenaktiven, sauren Katalysatoren (3) und einem Emulgator (4) und gegebenenfalls weiteren Stoffen (5) miteinander. Es wird eine stabilen Emulsion gebildet. Dadurch liegen die hergestellten Organopolysiloxane (O) in fein verteilter Form vor.

Die Herstellung kann diskontinuierlich oder kontinuierlich erfolgen.

Technologien zur Herstellung von Emulsionen von Organopolysiloxanen sind bekannt. So kann das intensive Mischen und Dispergieren in Rotor-Stator-Rührvorrichtungen, Kolloidmühlen, Hochdruckhomogenisatoren, Mikrokanälen, Membranen, Strahldüsen und ähnlichem, oder mittels Ultraschall erfolgen. Homogenisiergeräte und Verfahren sind z.B. in Ullmann's Encyclopedia of Industrial Chemistry, CD-ROM-Ausgabe 2003, Wiley-VCH Verlag, unter dem Stichwort "Emulsions" beschrieben.

Die Art der Mischung der Komponenten, die zur Herstellung der erfindungsgemässen Emulsionen gebraucht werden, ist nicht sehr kritisch und kann in verschiedener Reihenfolge ausgeübt werden. In Abhängigkeit von den Komponenten (1), (2), (3), (4) und gegebenenfalls (5) können sich aber bevorzugte Vorgehensweisen ergeben, die im Einzelfall geprüft werden sollten.

Es können z.B. die Komponenten (1) und (2) miteinander vorgemischt werden, daraufhin der oberflächenaktive, saure Katalysator (3) und die Emulgatoren zugefügt und danach das Dispersionsmittel und gegebenenfalls weitere Stoffe (5) eingearbeitet werden. Es ist auch möglich, die Komponenten (1) bis (3) bzw. bis (4) bzw. bis (5) der Reihe nach in die Emulgierapparatur zu dosieren. In vielen Fällen hat sich gezeigt, dass es vorteilhaft ist, Komponente (3) und/oder Komponente (4) oder Anteile von Komponente (3) und/oder Komponente (4) mit einem Teil des Dispersionsmittels in der Emulgierapparatur vorzulegen und in diese erhaltene Mischung die noch weiteren Komponenten (1) bis (5)zu dosieren. In besonderen Fällen kann es z.B. aufgrund der Siloxanviskosität oder -reaktivität vorteilhaft sein, Trialkylsilyl-terminiertes Organopolysiloxan (2) mit einem Hydroxy-terminierten Organopolysiloxan (1) zu mischen und danach ein anderes Hydroxy-terminiertes Organopolysiloxan (1) einzuarbeiten, oder umgekehrt, je nachdem, wie sich günstigere rheologische Eigenschaften für die Verarbeitung der Komponenten ergeben. Bei dem erfindungsgemäßen Verfahren wird das Dispersionsmittel Wasser in Mengen von vorzugsweise mindestens 1 Gew.-%, besonders bevorzugt mindestens 5 Gew.-%, insbesondere mindestens 10 Gew.-% und höchstens 99 Gew.-%, besonders bevorzugt höchstens 95 Gew.-%, insbesondere höchstens 90 Gew.-%, bezogen auf das Gesamtgewicht aller Inhaltsstoffe der Emulsion eingesetzt.

Als saure Katalysatoren (3) werden oberflächenaktive saure Polymerisationskatalysatoren (3) eingesetzt, da damit die Ölviskosität besonders gezielt und mit hoher Reproduzierbarkeit eingestellt werden können.

Als oberflächenaktive, saure Polymerisationskatalysatoren (3) kann bei dem erfindungsgemäßen Verfahren eine große Anzahl von Sulfonsäuren und Hydrogensulfaten verwendet werden, die sowohl wasser- als auch öllöslich sind.

Beispiele für verwendbare Sulfonsäuren sind aliphatisch substituierte Napthalinsulfonsäuren, aliphatisch substituierte Phenylsulfonsäuren, aliphatische Sulfonsäuren, Silylalkylsulfonsäuren und aliphatisch substituierte Diphenylethersulfonsäuren. Aliphatische Substituenten in diesem Sinne enthalten mindestens 6 C-Atome, vorzugsweise mindestens 8 C-Atome und besonders bevorzugt mindestens 10-C-Atome, sowie vorzugsweise nicht mehr als 18 C-Atome. Beispiele für solche aliphatischen Substituenten sind Hexyl-, Octyl-, Decyl-, Dodecyl-, Cetyl-, Myricyl-, Nonenyl- Phytyl- und Pentadecadienylreste.

Beispiele für verwendbare Hydrogensulfate sind Alkylhydrogensulfate mit verzweigten oder unverzweigten Alkylresten mit mindestens 8 und insbesondere 10 bis 18 Kohlenstoffatomen, wie Hexyl-, Octyl-, Dodecyl-, Cetyl-, Stearyl-, Myricyl-, Oleyl- und Octinylreste.

Als oberflächenaktive, saure Polymerisationskatalysatoren (3) können sowohl eine einzelne Verbindung als auch Gemische aus zwei oder mehr verschiedenen Verbindungen der genannten Arten eingesetzt werden. In der Praxis werden im allgemeinen Gemische verwendet, da diese Säuren aufgrund des hohen Molekulargewichts nur schwierig in reiner Form erhalten werden können.

Bei dem erfindungsgemässen Verfahren werden die sauren Katalysatoren (3) vorzugsweise in Mengen von mindestens 0,1 Gewichtsteilen, besonders bevorzugt mindestens 0,4 Gewichtsteilen, insbesondere mindestens 0,8 Gewichtsteilen und höchstens 50 Gewichtsteilen, besonders bevorzugt höchstens 40 Gewichtsteilen, insbesondere höchstens 30 Gewichtsteilen eingesetzt.

Falls als saure Katalysatoren (3) oberflächenaktive saure Polymerisationskatalysatoren (3) eingesetzt werden, die selbst als Emulgatoren wirken, kann auf den Zusatz von separatem Emulgator (4) verzichtet werden. In diesem Fall sind die Komponenten (3) und (4) identisch.

Bei dem erfindungsgemäßen Verfahren können als Emulgatoren (4) alle bisher bekannten, ionischen und nicht-ionischen Emulgatoren sowohl einzeln als auch als Mischungen verschiedener Emulgatoren eingesetzt werden, mit denen auch bisher wässrige Dispersionen, insbesondere wässrige Emulsionen von Organopolysiloxanen hergestellt werden konnten. Ebenso können bekanntermassen anorganische Feststoffe als Emulgatoren (4) eingesetzt werden. Dies sind z.B. Kieselsäuren oder Bentonite wie in EP 1017745 A oder DE 19742759 A beschrieben.

Beispiele für anionische Emulgatoren sind:
1. Alkylsulfate, besonders solche mit einer Kettenlänge von 8 bis 18 C-Atomen, Alkyl- und Alkarylethersulfate mit 8 bis 18 C-Atomen im hydrophoben Rest und 1 bis 40 Ethylenoxid (EO)- bzw. Propylenoxid(PO)einheiten.
2. Sulfonate, besonders Alkylsulfonate mit 8 bis 18 C-Atomen, Alkylarylsulfonate mit 8 bis 18 C-Atomen, Tauride, Ester und Halbester der Sulfobernsteinsäure mit einwertigen Alkoholen oder Alkylphenolen mit 4 bis 15 C-Atomen; gegebenenfalls können diese Alkohole oder Alkylphenole auch mit 1 bis 40 EO-Einheiten ethoxyliert sein.
3. Alkali- und Ammoniumsalze von Carbonsäuren mit 8 bis 20 C-Atomen im Alkyl-, Aryl-, Alkaryl- oder Aralkylrest.
4. Phosphorsäureteilester und deren Alkali- und Ammoniumsalze, besonders Alkyl- und Alkarylphosphate mit 8 bis 20 C-Atomen im organischen Rest, Alkylether- bzw. Alkaryletherphosphate mit 8 bis 20 C-Atomen im Alkyl- bzw. Alkarylrest und 1 bis 40 EO-Einheiten.

Beispiele für nichtionische Emulgatoren sind:
5. Polyvinylalkohol, der noch 5 bis 50%, vorzugsweise 8 bis 20 Vinylacetateinheiten aufweist, mit einem Polymerisationsgrad von 500 bis 3000.
6. Alkylpolyglycolether, vorzugsweise solche mit 3 bis 40 EO-Einheiten und Alkylresten von 8 bis 20 C-Atomen.
7. Alkylarylpolyglycolether, vorzugsweise solche mit 5 bis 40 EO-Einheiten und 8 bis 20 C-Atomen in den Alkyl- und Arylresten.
8. Ethylenoxid/Propylenoxid(EO/PO)-Blockcopolymere, vorzugsweise solche mit 8 bis 40 EO- bzw. PO-Einheiten.
9. Additionsprodukte von Alkylaminen mit Alkylresten von 8 bis 22 C-Atomen mit Ethylenoxid oder Propylenoxid.
10. Fettsäuren mit 6 bis 24 C-Atomen.
11. Alkylpolyglykoside der allgemeinen Formel R*-O-ZO, worin R* einen linearen oder verzweigten, gesättigten oder ungesättigten

Alkylrest mit im Mittel 8-24 C-Atomen und ZO einen Oligoglykosidrest mit im Mittel O = 1-10 Hexose- oder Pentoseeinheiten oder Gemischen davon bedeuten.
12. Naturstoffe und deren Derivate, wie Lecithin, Lanolin, Saponine, Cellulose ; Cellulosealkylether und Carboxyalkylcellulosen, deren Alkylgruppen jeweils bis zu 4 Kohlenstoffatome besitzen.
13. Polare Gruppen, enthaltend insbesondere die Elemente O, N, C, S, P, Si, enthaltende lineare Organo(poly)siloxane, insbesondere solche mit Alkoxygruppen mit bis zu 24 C-Atomen und/oder bis zu 40 EO- und/oder PO-Gruppen.

Beispiele für kationische Emulgatoren sind:
14. Salze von primären, sekundären und tertiären Fettaminen mit 8 bis 24 C-Atomen mit Essigsäure, Schwefelsäure, Salzsäure und Phosphorsäuren.
15. Quarternäre Alkyl- und Alkylbenzolammoniumsalze, insbesondere solche, deren Alkylgruppen 6 bis 24 C-Atome besitzen, insbesondere die Halogenide, Sulfate, Phosphate und Acetate.
16. Alkylpyridinium-, Alkylimidazolinium- und
   Alkyloxazoliniumsalze, insbesondere solche, deren Alkylkette bis zu 18 C-Atome besitzt, speziell die Halogenide, Sulfate, Phosphate und Acetate.

Als Ampholytische Emulgatoren eignen sich besonders:
17. Langkettig substituierte Aminosäuren, wie N-Alkyl-di-(aminoethyl-)glycin oder N-Alkyl-2-aminopropionsäuresalze.
18. Betaine, wie N-(3-Acylamidopropyl)-N,N-dimethylammoniumsalze mit einem C₈-C₁₈-Acylrest und Alkylimidazolium-Betaine.

Bevorzugt als Emulgatoren sind nichtionische Emulgatoren, insbesondere die vorstehend unter 6. aufgeführten Alkylpolyglycolether. Der Bestandteil (4) kann aus einem der o.g. Emulgatoren oder aus einem Gemisch zweier oder mehrerer o.g. Emulgatoren bestehen, er kann in reiner Form oder als Lösungen eines oder mehrerer Emulgatoren in Wasser oder organischen Lösungsmitteln eingesetzt werden.

Bei dem erfindungsgemässen Verfahren werden die Emulgatoren (4) vorzugsweise in Mengen von mindestens 0,1 Gewichtsteilen, besonders bevorzugt mindestens 0,4 Gewichtsteilen, insbesondere mindestens 0,8 Gewichtsteilen und höchstens 80 Gewichtsteilen, besonders bevorzugt höchstens 60 Gewichtsteilen, insbesondere höchstens 30 Gewichtsteilen eingesetzt.

Beispiele für wasserlöslich Feststoffe, die als weitere Stoffe (5) eingesetzt werden können, sind z.B. anorganische Salze wie Alkali- oder Erdalkalihalogenide, -sulfate, -phosphate, - hydrogenphosphate, z.B. Natriumchlorid, Kaliumsulfat, Magnesiumbromid, Calciumchlorid, Ammoniumchlorid, Ammoniumcarbonat, oder Salze von C₁- bis C₈-Carbonsäuren wie Alkali- oder Erdalkalisalze, z.B. Natriumacetat.

Beispiele für wasserunlösliche Feststoffe, die als weitere Stoffe (5) eingesetzt werden können, sind verstärkende und nicht verstärkende Füllstoffe. Beispiele für verstärkende Füllstoffe, also Füllstoffe mit einer BET-Oberfläche von mindestens 50 m²/g, sind pyrogen hergestellte Kieselsäure, gefällte Kieselsäure oder Silicium-Aluminium-Mischoxide mit einer BET-Oberfläche von mehr als 50 m²/g. Die genannten Füllstoffe können hydrophobiert sein. Beispiele für nicht verstärkenden Füllstoffe, also Füllstoffe mit einer BET-Oberfläche von weniger als 50 m²/g, sind Pulver aus Quarz, Kreide, Cristobalit, Diatomeenerde, Calciumsilikat, Zirkoniumsilikat, Montmorillonite, wie Bentonite, Zeolithe einschliesslich der Molekularsiebe, wie Natriumaluminiumsilikat, Metalloxide, wie Aluminium- oder Zinkoxid bzw. deren Mischoxide oder Titandioxid, Metallhydroxide, wie Aluminiumhydroxid, Bariumsulfat, Calciumcarbonat, Gips, Siliciumnitrid, Siliciumcarbid, Bornitrid, Glas-, Kohle- und Kunststoffpulver und Glas- und Kunststoffhohlkugeln.

Der Emulgiervorgang zur Herstellung der im Verfahren eingesetzten Emulsion wird vorzugsweise bei Temperaturen von mindestens 10°C, besonders bevorzugt mindestens 15°C und höchstens 80°C, besonders bevorzugt höchstens 70°C durchgeführt.

Die Temperaturerhöhung kommt vorzugsweise durch den Eintrag mechanischer Scherenergie, die für den Emulgierprozess benötigt wird, zustande. Die Temperaturerhöhung wird nicht zur Beschleunigung eines chemischen Prozesses benötigt. Weiterhin wird das erfindungsgemässe Verfahren vorzugsweise beim Druck der umgebenden Atmosphäre durchgeführt, kann aber auch bei höheren oder niederen Drücken durchgeführt werden.

Die mittels Lichtstreuung in den Emulsionen gemessene mittlere Teilchengrösse beträgt vorzugsweise mindestens 0,001 µm, besonders bevorzugt mindestens 0,002 µm und höchstens 100 µm, besonders bevorzugt höchstens 10 µm.

Das an den Emulgiervorgang anschliessende erfindungsgemässe Verfahren des Polymerisationsvorganges zur Herstellung von Emulsionen von Organopolysiloxanen (O) wird vorzugsweise bei Temperaturen von mindestens 1°C, besonders bevorzugt mindestens 15°C und höchstens 40°C, besonders bevorzugt höchstens 35°C durchgeführt. Die Emulsion wird bei dieser Temperatur vorzugsweise für eine gewisse Zeit, idealerweise unter 24 Stunden, belassen, bis der gewünschte Polymerisationsgrad erreicht ist. Hier kann eine gelegentliche oder stete Durchmischung vorteilhaft sein, was durch beliebige technische Hilfsmittel, wie rasche mechanische Bewegung oder Anwendung von Ultraschall, erreicht wird.

Die Emulsion wird nach der gewünschten Zeit mit beliebigen alkalisch wirkenden Mitteln neutralisiert, um die Kettenpropagation und die parallel verlaufende Kettenbruchreaktion zu stoppen. Die Zugabe des alkalisch wirkenden Mittels erfolgt unter Rühren bis ein pH-Wert von etwa 7 erreicht ist.

Als alkalisch wirkende Mittel zur Neutralisation der Emulsion können Salze wie (Erd) alkalimetallhydroxide, z.B. Natriumhydroxid, Kaliumhydroxid, Lithiumhydroxid, (Erd)alkalimetallcarbonate, z.B. Kaliumcarbonat, Natriumcarbonat, Lithiumcarbonat, oder Ammoniumsalze, z.B. Ammoniumhydroxid, oder deren wässrige Lösungen bzw. organische Amine, z.B. Triethanolamin (TEA), Triethylamin, Isopropylamin, oder deren wässrige Lösungen verwendet werden.

Nach beendeter Polymerisation kann das Organopolysiloxan (O) durch Brechen der Emulsion auf beliebige Weise, z.B. durch Zugabe wasserlöslicher organischer Lösemittel, z.B. Methanol, Ethanol, Isopropanol, Aceton, oder durch Zugabe von Salzen, wie Natriumchlorid, oder durch Entfernen des Wassers praktisch katalysatorfrei gewonnen werden.

Alle vorstehenden Symbole der vorstehenden Formeln weisen ihre Bedeutungen jeweils unabhängig voneinander auf. In allen Formeln ist das Siliciumatom vierwertig. Angaben zu Gewichtsteilen beziehen sich immer auf 100 Gewichtsteile Hydroxy-terminierte Organopolysiloxane (1).

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

### Beispiel 1

In einem Emulgiergerät (Fa. PC-Laborsystem) wird aus 5,20 Gew.% Isotridecyldecaethoxylat, 80%ig in Wasser, käuflich erwerblich unter dem Handelsnamen Lutensol^{®} TO 108 (Fa. BASF), 4,16 Gew.% 4-C₁₀-C₁₃-sek. -Alkyl-Benzolsulfonsäure, käuflich erwerblich unter dem Handelsnamen Marlon AS 3 (Fa. Sasol) und 5,20 Gew.% entsalztes Wasser ein Emulgatorgemisch hergestellt, zu dem portionsweise 49,48 Gew.% PDMS 1a (Polydimethylsiloxandiol mit einem Gehalt an terminalen OH-Gruppen von 0,765 Gew.% und einer Viskosität zwischen 70 und 100 mm²/s) und 1,40 Gew.% (2,75 Gew.% bezogen auf Silicon-Gehalt) PDMS 2a (Trimethylsilyl-terminiertes Polydimethylsiloxan der Viskosität zwischen 90 und 110 mm²/s) dosiert wird. Es wird dann mit insgesamt 31,69 Gew.% vollentsalztem Wasser portionsweise verdünnt, worauf man eine milchig-weisse Emulsion erhält. Nach 20 Stunden Polymerisationszeit bei 25°C wird mit Natronlauge (25 Gew.%ige Lösung) neutralisiert und konserviert. Die erhaltene , stabile Emulsion mit einer durchschnittlichen Teilchengrösse von 133 nm hat einen Festgehalt von 59,9 Gew.%.

Aus einem Teil der Emulsion wird das Siloxanpolymer mit Aceton gefällt und nachgewaschen. Das getrocknete Polysiloxan hat eine Viskosität von 114 000 mm²/s (25°C).

### Beispiel 2

Beispiel 1 wird sinngemäß wiederholt mit dem Unterschied, dass folgende Startmaterialien verwendet wurden: 3,74 Gew.% Isotridecyldecaethoxylat, 80%ig in Wasser, 2,99 Gew.% 4-C₁₀-C₁₃-sek.-Alkyl-Benzolsulfonsäure, 35,66 Gew.% PDMS 1a und 3,00 Gew.% (3,76 Gew.% bezogen auf Silicon-Gehalt) PDMS 2a. Nach 20 Stunden Polymerisationszeit bei 25°C und Neutralisation erhält man eine stabile Emulsion mit einer durchschnittlichen Teilchengrösse von 130 nm und einem Festgehalt von 45,3 Gew.%. Das wie in Beispiel 1 gefällte Polysiloxan hat eine Viskosität von 17 900 mm²/s (25°C).

### Beispiel 3

Beispiel 1 wird sinngemäß wiederholt mit dem Unterschied, dass folgende Startmaterialien verwendet wurden: 3,74 Gew.% Isotridecyldecaethoxylat, 80%ig in Wasser, 2,99 Gew.% 4-C₁₀-C₁₃-sek.-Alkyl-Benzolsulfonsäure, 35,66 Gew.% PDMS 1b (Polydimethylsiloxandiol mit einem Gehalt an terminalen OH-Gruppen von 0,418 Gew.% und einer Viskosität zwischen 250 und 280 mm²/s) und 1,50 Gew.% (4,04 Gew.% bezogen auf Silicon-Gehalt) PDMS 2a. Nach 20 Stunden Polymerisationszeit bei 25°C und Neutralisation erhält man eine stabile Emulsion mit einer durchschnittlichen Teilchengrösse von 125 nm.

Das wie in Beispiel 1 gefällte Polysiloxan hat eine Viskosität von 59 400 mm²/s (25°C).

### Beispiel 4

Beispiel 1 wird sinngemäß wiederholt mit dem Unterschied, dass folgende Startmaterialien verwendet wurden: 3,74 Gew.% Isotridecyldecaethoxylat, 80%ig in Wasser, 2,99 Gew.% 4-C₁₀-C₁₃-sek.-Alkyl-Benzolsulfonsäure, 35,66 Gew.% PDMS 1a und 3,00 Gew.% (7,76 Gew.% bezogen auf Silicon-Gehalt) PDMS 2b (Trimethylsilyl-terminiertes Polydimethylsiloxan der Viskosität zwischen 330 und 370 mm²/s). Nach 20 Stunden Polymerisationszeit bei 25°C und Neutralisation erhält man eine stabile Emulsion mit einer durchschnittlichen Teilchengrösse von 126 nm.

Das wie in Beispiel 1 gefällte Polysiloxan hat eine Viskosität von 63 700 mm²/s (25°C).

### Beispiele 5-8

Folgende Beispiele wurden sinngemäß nach Beispiel 1 bzw. 2 hergestellt und zeigen die hohe Reproduzierbarkeit bezüglich der Viskosität des durch die Emulsionspolymerisation erhaltenen Polysiloxans bei Verwendung des PDMS 2a.

Auch geringe Unterschiede bezüglich der Menge an Trimethylsilyl-terminiertem Polydimethylsiloxan 2a führen zu keiner größeren Variationsbreite der gewünschten Viskosität:

**Tabelle 1**

| Beispiel | Menge an 1a | Menge an 2a (bezogen auf Silicon-Gehalt) | Viskosität |
|---|---|---|---|
| Beispiel 5 | 35,66 Gew.% | 4,04 Gew.% | 58 600 mm²/s |
| Beispiel 6 | 35,66 Gew.% | 4,04 Gew.% | 61 900 mm²/s |
| Beispiel 7 | 49,41 Gew.% | 3,89 Gew.% | 60 200 mm²/s |
| Beispiel 8 | 49,48 Gew.% | 3,96 Gew.% | 61 100 mm²/s |

### Vergleichsbeispiele 9-13 (nicht erfindungsgemäß)

Beispiel 1 wird sinngemäß wiederholt mit dem Unterschied, dass folgende Startmaterialien verwendet wurden: 3,74 Gew.% Isotridecyldecaethoxylat, 80%ig in Wasser, 2,99 Gew.% 4-C₁₀-C₁₃-sek.-Alkyl-Benzolsulfonsäure, 35,66 Gew.% PDMS 1a und 0,23 Gew.% (0,64 Gew.% bezogen auf Silicon-Gehalt) PDMS 2c (Trimethylsilyl-terminiertes Polydimethylsiloxan der Viskosität zwischen 9 und 11 mm²/s). Nach 15 Stunden Polymerisationszeit bei 20°C und Neutralisation erhält man eine stabile Emulsion mit einer durchschnittlichen Teilchengrösse von 109 nm und einem Festgehalt von 42,0 Gew.%.

Das wie in Beispiel 1 gefällte Polysiloxan hat eine Viskosität von 56 700 mm²/s (25°C).

Das Beispiel wird wiederholt, wobei wie in Beispiel 1 gefällte Polysiloxane mit Viskositäten (wie in folgender Tabelle 2 gezeigt) erhalten wird.

Die Variationsbreite der erhaltenen Viskositäten ist deutlich breiter; die Herstellung von Emulsionen mit Polysiloxanen bestimmter Viskositätsbereiche ist gezielt nicht möglich.

**Tabelle 2**

| Beispiel | Menge an 1a | Menge an 2c (bezogen auf Silicon-Gehalt) | Viskosität |
|---|---|---|---|
| Beispiel 9 | 35,66 Gew.% | 0,64 Gew.% | 56 700 mm²/s |
| Beispiel 10 | 35,66 Gew.% | 0,64 Gew.% | 82 200 mm²/s |
| Beispiel 11 | 35,66 Gew.% | 0,64 Gew.% | 121 000 mm²/s |
| Beispiel 12 | 35,66 Gew.% | 0,59 Gew.% | 107 000 mm²/s |
| Beispiel 13 | 35,66 Gew.% | 0,59 Gew.% | 135 000 mm²/s |

## Patentansprüche

1. Verfahren zur Herstellung von Emulsionen von Organopolysiloxanen (O), bei dem in wässrigem Medium
(1) 100 Gewichtsteile Hydroxy-terminierte Organopolysiloxane und
(2) mindestens 0,01 Gewichtsteile Trialkylsilyl-terminierte Organopolysiloxane der allgemeinen Formel 2 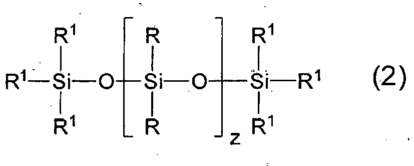 wobei
**R** einen einwertigen, unsubstituierten oder Substituenten, die Elemente enthalten, die ausgewählt werden aus N, P, S, O, Si, H und Halogen tragenden, gesättigten oder ungesättigten Kohlenwasserstoffrest mit 1 bis 36 Kohlenstoffatomen bedeutet,
**R¹** einen Alkylrest mit 1 bis 18 Kohlenstoffatomen, der durch Sauerstoffatome unterbrochen sein kann, bedeutet und
**z** so zu wählen ist, dass die Viskosität des Trialkylsilylterminierten Organopolysiloxans (2) von 55 bis 50 000 mm²/s bei 25 deg. C beträgt,
in Gegenwart von
(3) oberflächenaktiven sauren Polymerisationskatalysatoren, die ausgewählt werden aus Sulfonsäuren und Hydrogensulfaten_und
(4) Emulgator
bis zum Erreichen der gewünschten Molekülgröße polymerisiert werden.

2. Verfahren nach Anspruch 1, bei dem die Hydroxy-terminierten Organopolysiloxane (1) Polymere der allgemeinen Formel 1 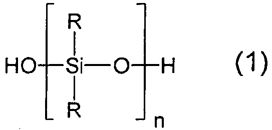 sind, wobei
**R** einen einwertigen, unsubstituierten oder Substituenten, die Elemente enthalten, die ausgewählt werden aus N, P, S, O, Si, H und Halogen tragenden, gesättigten oder ungesättigten Kohlenwasserstoffrest mit 1 bis 36 Kohlenstoffatomen bedeutet und
**n** so zu wählen ist, dass die Viskosität des Hydroxyterminierte Organopolysiloxans (1) 5 bis 80 000 mm²/s bei 25 deg. C beträgt.

3. Verfahren nach Anspruch 1 oder 2, bei dem die Hydroxy-terminierten Organopolysiloxane (1) Viskositäten von 20 mm²/s bis 10 000 mm²/s, bei 25 deg. C aufweisen.

4. Verfahren nach Anspruch 1 bis 3, bei dem die Trialkylsilyl-terminierten Organopolysiloxane (2) Viskositäten von 60 mm²/s bis 20 000 mm²/s, jeweils bei 25 deg. C aufweisen.

5. Verfahren nach Anspruch 1 bis 4, bei dem als Emulgatoren (4) nichtionische Emulgatoren eingesetzt werden.

## Claims

1. Process for preparing emulsions of organopolysiloxanes (O), which comprises polymerizing
(1) 100 parts by weight of hydroxyl-terminated organopolysiloxanes and
(2) at least 0.01 part by weight of trialkylsilyl-terminated organopolysiloxanes of the general formula 2 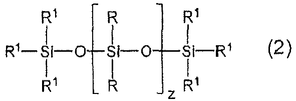 where
**R** denotes a monovalent saturated or unsaturated hydrocarbyl radical having 1 to 36 carbon atoms which is unsubstituted or bears substituents containing elements selected from N, P, S, O, Si, H and halogen,
**R¹** denotes an alkyl radical having 1 to 18 carbon atoms which may be interrupted by oxygen atoms, and
**z** is chosen such that the viscosity of the trialkylsilyl-terminated organopolysiloxane (2) is in the range from 55 to 50 000 mm²/s at 25 deg. C,
in the presence of
(3) surface-active acidic polymerization catalysts selected from sulphonic acids and hydrogensulphates and
(4) emulsifier
in an aqueous medium until the desired molecular size is reached.

2. Process according to Claim 1, wherein the hydroxyl-terminated organopolysiloxanes (1) are polymers of the general formula 1 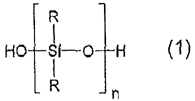 where
**R** denotes a monovalent saturated or unsaturated hydrocarbyl radical having 1 to 36 carbon atoms which is unsubstituted or bears substituents containing elements selected from N, P, S, O, Si, H and halogen, and
**n** is selected such that the viscosity of the hydroxyl-terminated organopolysiloxane (1) is in the range from 5 to 80 000 mm²/s at 25 deg. C.

3. Process according to Claim 1 or 2, wherein the hydroxyl-terminated organopolysiloxanes (1) have viscosities of 20 mm²/s to 10 000 mm²/s at 25 deg. C.

4. Process according to Claim 1 to 3, wherein the trialkylsilyl-terminated organopolysiloxanes (2) have viscosities of 60 mm²/s to 20 000 mm²/s, each at 25 deg. C.

5. Process according to Claim 1 to 4, wherein nonionic emulsifiers (4) are used.

## Revendications

1. Procédé pour la préparation d'émulsions d'organopolysiloxanes (O) dans lequel on polymérise, dans un milieu aqueux
(1) 100 parties en poids d'organopolysiloxanes terminés par hydroxy et
(2) au moins 0,01 partie en poids d'organopolysiloxanes terminés par trialkylsilyle de formule générale 2 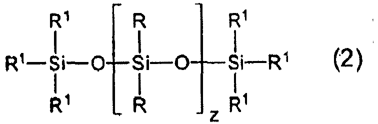 où
R signifie un radical hydrocarboné saturé ou insaturé, monovalent, non substitué ou portant des substituants contenant des éléments choisis parmi N, P, S, O, Si, H et halogène, comprenant 1 à 36 atomes de carbone,
R¹ signifie un radical alkyle comprenant 1 à 18 atomes de carbone, qui peut être interrompu par des atomes d'oxygène, et
z est à choisir de manière telle que la viscosité de l'organopolysiloxane terminé par trialkylsilyle (2) vaut 55 à 50 000 mm²/s à 25°C, en présence de
(3) catalyseurs de polymérisation acides tensioactifs, choisis parmi les acides sulfoniques et les hydrogénosulfates et
(4) un émulsifiant jusqu'à l'obtention de la taille moléculaire désirée.

2. Procédé selon la revendication 1, dans lequel les organopolysiloxanes terminés par hydroxy (1) sont des polymères de formule générale 1, 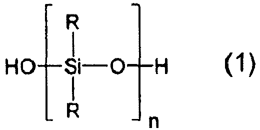 où
R signifie un radical hydrocarboné saturé ou insaturé, monovalent, non substitué ou portant des substituants contenant des éléments choisis parmi N, P, S, O, Si, H et halogène, comprenant 1 à 36 atomes de carbone et
n est à choisir de manière telle que la viscosité de l'organopolysiloxane terminé par hydroxy (1) vaut 5 à 80 000 mm²/s à 25°C.

3. Procédé selon la revendication 1 ou 2, dans lequel les organopolysiloxanes terminés par hydroxy (1) présentent des viscosités de 20 mm²/s à 10 000 mm²/s à 25°C.

4. Procédé selon les revendications 1 à 3, dans lequel les organopolysiloxanes terminés par trialkylsilyle (2) présentent des viscosités de 60 mm²/s à 20 000 mm²/s, à chaque fois à 25°C.

5. Procédé selon les revendications 1 à 4, dans lequel on utilise, comme émulsifiants (4), des émulsifiants non ioniques.
